(19) Europäisches Patentamt
European Patent Office
Office européen des brevets

(11) **EP 1 334 577 B1**

(12) **FASCICULE DE BREVET EUROPEEN**

(45) Date de publication et mention
de la délivrance du brevet:
**22.08.2007 Bulletin 2007/34**

(21) Numéro de dépôt: **01994549.2**

(22) Date de dépôt: **07.11.2001**

(51) Int Cl.:
*H04B 17/00* $^{(2006.01)}$     *G01S 11/06* $^{(2006.01)}$

(86) Numéro de dépôt international:
**PCT/FR2001/003451**

(87) Numéro de publication internationale:
**WO 2002/041539 (23.05.2002 Gazette 2002/21)**

(54) **PROCEDE ET DISPOSITIF D'EVALUATION DU NIVEAU ENERGETIQUE D'UN SIGNAL RADIO**

VERFAHREN UND GERÄT ZUR SCHÄTZUNG DES ENERGIEPEGELS EINES FUNKSIGNALS

METHOD AND DEVICE FOR EVALUATING THE ENERGY LEVEL OF A RADIO SIGNAL

(84) Etats contractants désignés:
**AT BE CH CY DE DK ES FI FR GB GR IE IT LI LU MC NL PT SE TR**

(30) Priorité: **14.11.2000 FR 0014612**

(43) Date de publication de la demande:
**13.08.2003 Bulletin 2003/33**

(73) Titulaire: **Alcatel Lucent**
**75008 Paris (FR)**

(72) Inventeurs:
• **BEN RACHED, Nidham**
**F-75017 Paris (FR)**
• **LUCIDARME, Thierry**
**F-78180 Montigny-le-Bretonneux (FR)**
• **DE LANNOY, Arnaud**
**F-78000 Versailles (FR)**

(74) Mandataire: **Ameline, Jean-Paul B.C.**
**Alcatel-Lucent**
**Intellectual Property & Standards**
**54, rue La Boétie**
**75008 Paris (FR)**

(56) Documents cités:
**WO-A-98/16079          FR-A- 2 782 227**

• **HOLTZMAN J M: "ADAPTIVE MEASUREMENT INTERVALS FOR HANDOFFS" DISCOVERING A NEW WORLD OF COMMUNICATIONS. CHICAGO, JUNE 14 - 18, 1992, PROCEEDINGS OF THE INTERNATIONAL CONFERENCE ON COMMUNICATIONS, NEW YORK, IEEE, US, vol. 2, 14 juin 1992 (1992-06-14), pages 1032-1036, XP000326826 ISBN: 0-7803-0599-X**
• **AUSTIN M D ET AL: "VELOCITY ADAPTIVE HANDOFF ALGORITHMS FOR MICROCELLULAR SYSTEMS" IEEE TRANSACTIONS ON VEHICULAR TECHNOLOGY, IEEE INC. NEW YORK, US, vol. 43, no. 3, PART 1, 1 août 1994 (1994-08-01), pages 549-561, XP000466790 ISSN: 0018-9545**

**Description**

La présente invention concerne les mesures énergétiques effectuées dans les systèmes de radiocommunication avec les mobiles.

De telles mesures sont notamment utilisables dans des procédures de contrôle des liens radio qui servent de façon générale à optimiser la qualité des transmissions et à minimiser les interférences entre utilisateurs. Parmi ces procédures, on peut citer la régulation de la puissance d'émission par les mobiles et/ou par l'infrastructure, le contrôle des transferts automatiques de cellule (« handover ») dans les réseaux cellulaires, l'adaptation du codage de canal aux conditions de propagation, l'adaptation du codage de source (notamment dans le cas des codeurs de parole à débit variable de type AMR - « Adaptive Multi-Rate »), les procédures d'adaptation de liens (« Link Adaptation »), etc.

L'efficacité de ce genre de procédure dépend de la disponibilité de mesures énergétiques fiables dans un délai aussi court que possible, afin que les décisions adéquates puissent être prises assez rapidement.

D'un autre côté, la prise en compte d'échantillons de mesure ponctuels peut perturber les algorithmes de contrôle mis en oeuvre, en raison des fluctuations à court terme du canal de propagation. C'est pourquoi il est généralement effectué un lissage temporel de ces échantillons au moyen d'une fenêtre de moyennage de durée égale à N fois la période entre échantillons. La fenêtre peut être rectangulaire : on effectue alors une moyenne arithmétique des N derniers échantillons. Il est courant d'employer une fenêtre exponentielle avec un facteur d'oubli $\alpha = 1/N$ : à réception d'un n-ième échantillon $C(n)$, on produit alors une valeur lissée $\overline{C}(n) = (1 - \alpha).\overline{C}(n-1) + \alpha.C(n)$.

Une durée longue de la fenêtre de moyennage diminue l'écart type de l'estimation du paramètre mesuré, et améliore donc la fiabilité de la mesure. Inversement, une durée courte augmente la rapidité d'acquisition des mesures et permet donc, pour autant qu'elles soient fiables, d'optimiser les performances de l'algorithme de contrôle qui les exploite. Le choix de cette durée résulte d'un compromis entre ces deux exigences contradictoires.

La publication «Adaptive intervals for handoffs» de Holtzman J M, proceedings of the international conférence on communications, New York, IEEE, US, vol. 2, 14 juin 1992, pages 1032-1036 concerne les informations dans les mesures de puissance des signaux pour améliorer la qualité des décisions des transferts automatiques de cellule. La publication également concerne un intervalle dans le calcul de puissance moyen.

Un but de la présente invention est de proposer une façon plus fine de réaliser ce compromis.

L'invention propose ainsi un procédé d'évaluation d'un niveau énergétique d'un signal reçu par l'intermédiaire d'une interface radio entre des stations de radiocommunication, dans lequel on obtient des échantillons de mesure successifs dépendant de l'énergie du signal, et on calcule une moyenne desdits échantillons pour évaluer le niveau énergétique. Selo l'invention, le calcul de moyenne desdits échantillons est effectué avec une durée de moyennage dépendant d'un service dans le cadre duquel s'inscrit le signal reçu.

En particulier, la durée de moyennage peut croître en fonction du débit d'information porté par le signal.

Dans une réalisation préférée de l'invention, on estime une vitesse de déplacement d'une des stations, et la durée de moyennage dépend également de la vitesse estimée.

L'écart type de l'estimateur du niveau énergétique dépend de la durée de moyennage et de la vitesse de la station mobile. C'est généralement une fonction décroissante de la durée de moyennage et de la vitesse. En ajustant la durée de moyennage en fonction de la vitesse, on peut viser une certaine valeur d'écart type et donc répondre aux besoins d'une application donnée, telle qu'une procédure de contrôle de liens radio.

La vitesse de déplacement de la station mobile peut être estimée par divers moyens. Dans une réalisation avantageuse, elle est estimée sur la base des variations dans le temps des échantillons de mesure.

Un autre aspect de l'invention se rapporte à un dispositif d'évaluation d'un niveau énergétique d'un signal reçu par une station mobile de radiocommunication, comprenant des moyens de mesure pour obtenir des échantillons successifs dépendant de l'énergie du signal, et des moyens de calcul d'une moyenne desdits échantillons pour évaluer le niveau énergétique, les moyens de calcul de moyenne étant commandés pour faire dépendre une durée de moyennage des échantillons d'un service dans le cadre duquel s'inscrit le signal reçu.

Un troisième aspect de l'invention se rapporte à un dispositif d'évaluation d'un niveau énergétique d'un signal reçu par une station fixe de radiocommunication en provenance d'une station mobile, comprenant des moyens de mesure pour obtenir des échantillons successifs dépendant de l'énergie du signal, et des moyens de calcul d'une moyenne desdits échantillons pour évaluer le niveau énergétique, les moyens de calcul de moyenne étant commandés pour faire dépendre une durée de moyennage des échantillons d'un service dans le cadre duquel s'inscrit le signal reçu.

D'autres particularités et avantages de la présente invention apparaîtront dans la description ci-après d'exemples de réalisation non limitatifs, en référence aux dessins annexés, dans lesquels :

- la figure 1 est un schéma synoptique d'un exemple de récepteur de radiocommunication mettant en oeuvre le procédé selon l'invention ;
- la figure 2 est un graphique illustrant des abaques utilisables dans le procédé selon l'invention ;
- la figure 3 est un diagramme illustrant des éléments d'un système de radiocommunication de type UMTS ; et

- les figures 4 à 6 sont des diagrammes illustrant diverses répartitions possibles de moyens utilisés par le procédé entre les éléments de la figure 3.

L'invention est décrite ci-après dans son application non limitative aux réseaux cellulaires à accès multiple à répartition par codes (CDMA, « Code-Division Multiple Access ») de type UMTS (« Universal Mobile Telecommunications System »).

Dans un système CDMA, les symboles transmis, binaires ($\pm$ 1) ou quaternaires ($\pm$ 1 $\pm$ j), sont multipliés par des codes d'étalement composés d'échantillons, appelés « chips », dont la cadence est supérieure à celle des symboles. Des codes d'étalement orthogonaux ou quasi-orthogonaux sont alloués à différents canaux logiques partageant la même fréquence porteuse, afin de permettre à chaque récepteur de détecter la séquence de symboles qui lui est destinée, en multipliant le signal reçu par le code d'étalement correspondant.

Le récepteur en râteau (« rake receiver ») effectue une démodulation cohérente fondée sur une approximation de la réponse impulsionnelle du canal de propagation radio par une série de pics, chaque pic apparaissant avec un retard correspondant au temps de propagation le long d'un trajet particulier et ayant une amplitude complexe correspondant à l'atténuation et au déphasage du signal le long de ce trajet (réalisation instantanée du fading). En analysant plusieurs trajets de réception, c'est-à-dire en échantillonnant plusieurs fois la sortie d'un filtre adapté au code d'étalement du canal, avec des retards correspondant respectivement à ces trajets, le récepteur en râteau obtient des estimations multiples des symboles transmis, qui sont combinées pour obtenir un gain en diversité. La combinaison peut notamment être effectuée selon la méthode dite MRC (« Maximum Ratio Combining »), qui pondère les différentes estimations en fonction des amplitudes complexes observées pour les différents trajets.

Afin de permettre cette démodulation cohérente, des symboles pilotes sont prévus pour l'estimation de la réponse impulsionnelle sous forme d'une succession de pics. La réponse impulsionnelle est estimée au moyen d'un filtre adapté à un code d'étalement particulier, qui peut être le code d'étalement de la communication en cours ou celui alloué spécialement à un canal pilote, avec lequel l'émetteur module une séquence de symboles connus a priori, par exemple des symboles à 1. Les positions des maxima de la sortie de ce filtre adapté donnent les retards utilisés dans les doigts du récepteur en râteau, et les amplitudes complexes associées correspondent aux valeurs de ces maxima.

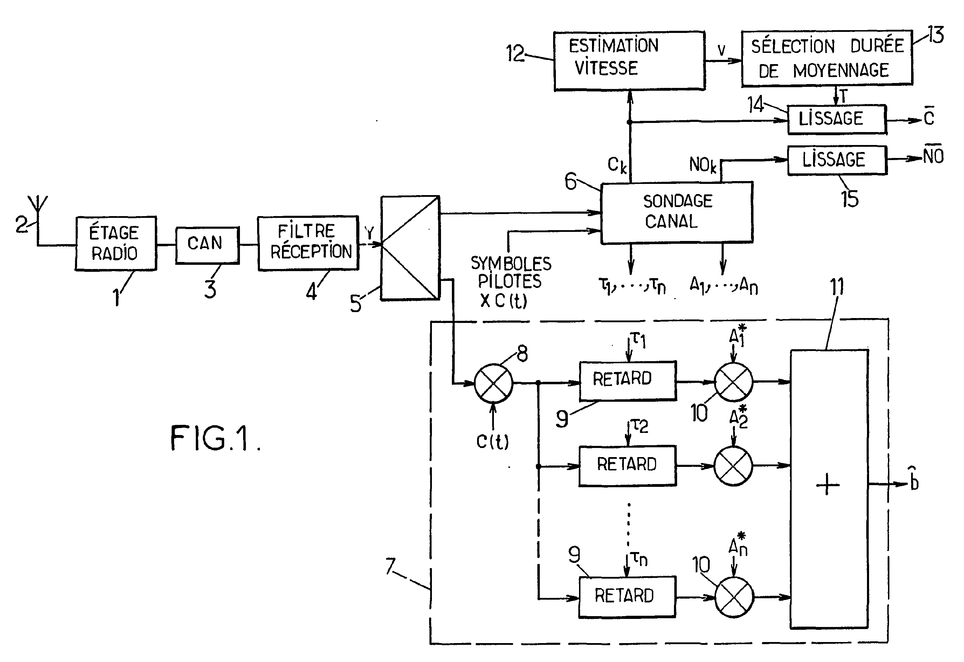

Le récepteur CDMA représenté sur la figure 1 comporte un étage radio 1 qui reçoit le signal radio capté par l'antenne 2 et le transpose à plus basse fréquence. Le signal qui en résulte est numérisé par un convertisseur analogique-numérique 3, puis fourni à un filtre de réception 4. Le filtre 4 assure un filtrage adapté à la mise en forme des signaux par l'émetteur. Il délivre un signal numérique Y à raison d'un échantillon complexe par chip des codes d'étalement.

Dans le cas où les symboles pilotes sont multiplexés dans le temps avec les symboles d'information (qui est celui des liaisons descendantes dans le système UMTS), un démultiplexeur 5 distribue le signal Y entre un module de sondage de canal 6, qui opère sur le signal correspondant aux symboles pilotes, et un récepteur en râteau 7 qui traite le reste du signal à l'aide de paramètres caractéristiques du canal fournis par le module de sondage 6. Les symboles pilotes peuvent aussi se trouver sur une voie autre que les symboles d'information (ce qui est le cas des liaisons montantes dans le système UMTS).

Le module de sondage 6 estime de façon connue en soi des retards de propagation $\tau_1$, ..., $\tau_n$ correspondant à des trajets multiples de propagation entre l'émetteur et le récepteur. Pour cela, il effectue un filtrage adapté du signal Y par le produit des symboles pilotes et du code d'étalement c(t), et il détecte les positions temporelles des n pics les plus intenses de la sortie de ce filtre adapté. Les amplitudes complexes de ces pics $A_1$, ..., $A_n$ sont fournies au récepteur en râteau 7 conjointement aux retards $\tau_1$, ..., $\tau_n$.

Le récepteur 7 comprend également un filtre adapté 8 qui multiplie le signal reçu Y par le code d'étalement du canal c(t) ou son conjugué. Chacun des retards $\tau_i$ ($1 \leq i \leq n$) est appliqué à la sortie de ce filtre adapté 8, et le signal ainsi retardé est multiplié par le complexe conjugué $A_i^*$ de l'amplitude complexe $A_i$ fournie par le module de sondage 6. Conformément à la méthode MRC, les n contributions qui en résultent sont sommées par un additionneur 11 pour obtenir les symboles d'informations estimés $\hat{b}$.

Parmi les paramètres disponibles dans le module de sondage 6, il y a l'énergie $C_k$ d'un bloc de signal reçu sur les n trajets de propagation considérés. Cette énergie $C_k$, ramenée à la durée d'un bit, est donnée par la somme des modules carrés des amplitudes $A_i$ :

$$C_k = \frac{1}{N} \sum_{i=1}^{n} \beta_k |A_i|^2 \qquad (1)$$

où N est le nombre de symboles pilotes du bloc de signal considéré et $\beta_k$ est un coefficient pondérateur tenant compte de l'amplification ou de l'atténuation introduite, le cas échéant, par les procédures de contrôle de la puissance d'émission.

Le récepteur dispose ainsi d'un échantillon de mesure. énergétique C par bloc de signal reçu. Dans les canaux dédiés du système UMTS, ce bloc correspond à un intervalle de temps de 2560 chips, soit 666 $\mu$s, et le nombre N peut aller 2 à 16 (voir sections 5.2.1 et 5.3.2 de la spécification technique 3G TS 25.211 v3.3.0 « Physical channels and mapping of transport channels onto physical channels (FDD) (Release 1999) » publiée en juin 2000 par le 3GPP (« Third Generation Partnership Project »)).

A partir de ces échantillons de mesure $C_k$, il est possible d'estimer la vitesse v de déplacement de la station mobile. Cette estimation peut avoir lieu dans la station mobile sur la base du signal descendant, ou dans la station fixe sur la base du signal montant.

L'estimation de vitesse peut notamment exploiter la propriété que la variance de la dérivée première de $C_k$ par rapport au temps est l'opposée de la dérivée seconde de la fonction d'autocorrélation $R_{CC}(\tau)$ de l'énergie $C_k$ pour un décalage temporel $\tau = 0$, cette dérivée seconde étant elle-même proportionnelle au carré de la vitesse. Dans le cadre du modèle de Jake et pour un signal d'énergie a, la constante de proportionnalité vaut $-\left(\dfrac{2\pi^2 v^2}{\lambda^2}\right)a^2$, $\lambda$ étant la longueur d'onde radio utilisée.

En pratique, le module 12 peut estimer la vitesse de déplacement v de la manière suivante. On se donne une durée sur laquelle s'applique l'estimation de vitesse, exprimée en nombre d'échantillons de mesure p. L'énergie a est estimée par la moyenne des échantillons $C_k$, indexés par un entier k dans l'équation (2) :

$$a = \frac{1}{p}\sum_{k=1}^{p}C_k \qquad\qquad (2)$$

Le module 12 détermine la suite dérivée de $C_k$ : $D_1, D_2, ..., D_p$ avec $D_k = (C_k - C_{k-1})/T_e$, où $T_e$ est la durée entre deux échantillons de mesure. La variance de cette suite est estimée par :

$$S = \frac{1}{p}\sum_{k=1}^{p}D_k^2 \qquad\qquad (3)$$

Le module 12 peut alors estimer la vitesse selon :

$$v = \frac{1}{\sqrt{2}}\cdot\frac{\lambda}{\pi.a}.\sqrt{S} \qquad\qquad (4)$$

La durée $p.T_e$ est typiquement de l'ordre de grandeur de la seconde. En pratique, les moyennes arithmétiques des relations (2) et (3) peuvent être remplacées par un lissage de type exponentiel avec un facteur d'oubli $\alpha = 1/p$.

L'écart type d'un processus aléatoire de fonction d'autocorrélation $R_{xx}$ observé sur une durée T est donné par :

$$\sigma^2 = \frac{1}{T}\int_{-T}^{T}\left(1 - \frac{\tau}{T}\right)R_{xx}(\tau)d\tau \qquad\qquad (5)$$

Dans le cas du fading de Rayleigh et pour le modèle de Jake, la fonction d'autocorrélation de l'énergie exprimée en dB s'écrit :

$$R_{\overline{x}\overline{x}}(\tau) = 5.57^2 \times J_0^2\left(\frac{2\pi V\tau}{\lambda}\right) \qquad (6)$$

où $J_0$ désigne la fonction de Bessel d'ordre 0. En conséquence, l'écart type $\sigma$ en dB est donné par :

$$\sigma = \sqrt{\frac{2}{T}\int_0^T \left(1 - \frac{\tau}{T}\right) \times 5.57^2 \times J_0^2\left(\frac{2\pi V\tau}{\lambda}\right) d\tau} \qquad (7)$$

A partir de cette équation (7), on peut déterminer en fonction de la vitesse v la période T de moyennage de l'énergie nécessaire pour atteindre un écart type donné $\sigma$.

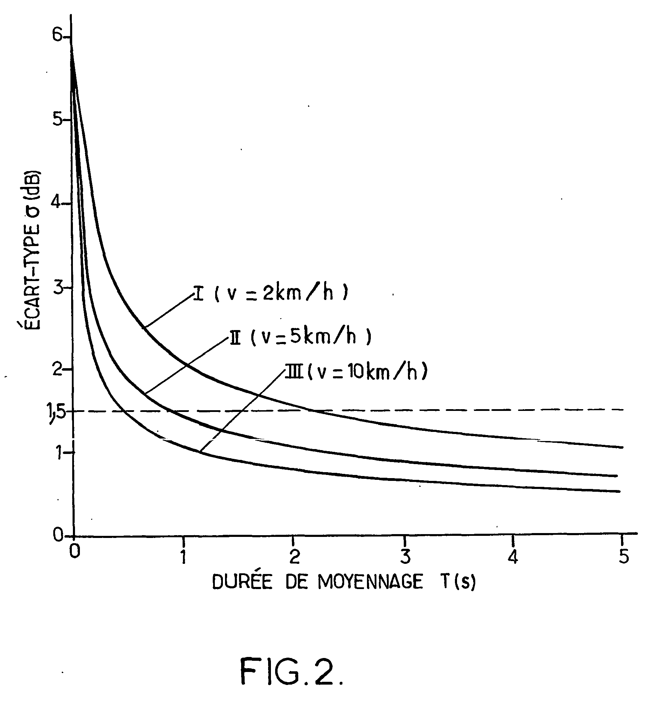

Sur la figure 2, on a représenté trois courbes I, II, III qui correspondent à l'expression (7) de l'écart type $\sigma$ en fonction de la durée de moyennage T pour des vitesses de déplacement v respectivement égales à 2 km/h, 5 km/h et 10 km/h, la longueur d'onde $\lambda$ correspondant à une fréquence porteuse de 1950 MHz.

Si on se donne un objectif en termes d'écart type $\sigma$, dans le cadre d'une procédure utilisant les mesures de $C_k$ moyennées, on peut ainsi, partant de la vitesse v estimée par le module 12, déterminer la durée de moyennage T à prendre en considération.

Par exemple, dans le cas de la figure 2, un écart type de 1,5 dB sur la mesure énergétique est obtenu avec une durée de moyennage d'autant plus courte que la vitesse est grande : T ≈ 2,2 s pour v = 2 km/h, T ≈ 0,9 s pour v = 5 km/h et T ≈ 0,4 s pour v = 10 km/h.

Cette sélection de la durée de moyennage T est effectuée par le module 13 représenté sur la figure 1.

La durée de moyennage sélectionnée par le module 13 peut dépendre du service dans lequel s'inscrit le signal transmis. Pour certains services, il peut en effet être justifié de viser un écart-type $\sigma$ sur les mesures énergétiques plus faible que pour d'autres services.

Par exemple, dans le cadre multimédia prévu dans l'UMTS, les services de débit relativement élevé empruntent des canaux à faible facteur d'étalement. En conséquence, pour obtenir une qualité de transmission donnée en termes de taux d'erreur binaire, ces canaux à haut débit ont généralement une puissance d'émission plus forte que les canaux à relativement bas débit. Dans ces conditions, la précision relative des mesures exploitées dans la procédure de contrôle de puissance est plus sensible pour ces services à haut débit. On visera donc une valeur d'écart type $\sigma$ plus faible pour les canaux à débit élevé, ce qui conduit, pour une vitesse donnée, à augmenter la durée de moyennage T.

La sélection de la durée de moyennage T peut être effectuée en mémorisant des tables correspondant aux courbes de la figure 2, et en accédant à ces tables à l'aide de l'objectif d'écart type $\sigma$ et de la vitesse v estimée par le module 12. Bien entendu, il est possible de ne stocker qu'un nombre restreint de valeurs dans les tables, en complétant les valeurs manquantes par interpolation lorsque c'est nécessaire. Ces tables peuvent être différenciées d'un service à un autre, notamment en fonction du débit d'information porté par le signal. La dépendance de la durée T en fonction du service est alors réalisée en sélectionnant la table appropriée sur la base du service courant.

Le lissage des échantillons de mesure $C_k$ peut alors être effectué par le module 14 représenté sur la figure 1, de préférence à l'aide d'une fenêtre exponentielle utilisant un facteur d'oubli $\alpha = T_e/T$. Les valeurs lissées $\overline{C}$ qui en résultent peuvent alors être utilisées dans diverses procédures de contrôle des liens radio. Si celles-ci requièrent un écart type $\sigma$ plus faible ou peuvent se contenter d'un écart type $\sigma$ plus grand, la durée T est ajustée en conséquence par le module 13.

De façon connue, le module 6 de sondage du canal peut également délivrer des échantillons de mesure $N0_k$ du bruit observé sur le canal. Ces échantillons peuvent également faire l'objet d'un lissage par un filtre à fenêtre exponentielle 15. Pour cela, on utilise avantageusement le même facteur d'oubli $\alpha = T_e/T$ que dans le filtre 14.

Si l'application a besoin d'estimations du rapport signal/bruit, le lissage peut porter sur la quantité $C_k/N0_k$. Le niveau énergétique pris en compte est alors normalisé par rapport au niveau du bruit.

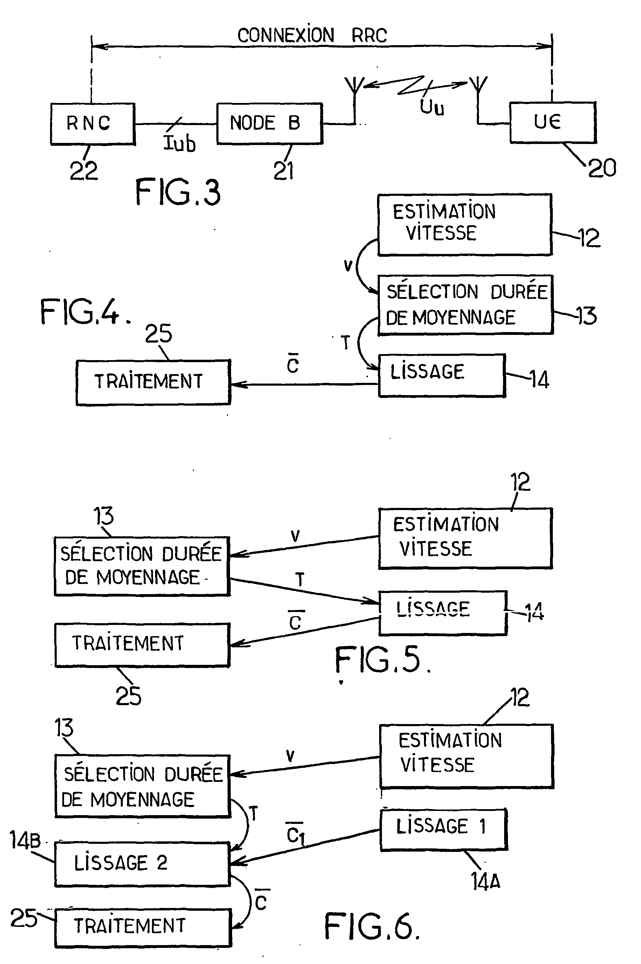

La figure 3 montre schématiquement les éléments du réseau d'accès radio UTRAN (« UMTS Terrestrial Radio Access Network ») faisant partie d'un réseau UMTS. L'UTRAN comprend des contrôleurs de réseau radio 22 appelés RNC (« Radio Network Controller ») reliés à travers une interface normalisée *Iub* à des stations fixes 21 appelées « nodes B ». Ces stations fixes 21 communiquent avec les stations mobiles 20, appelées UE (« User Equipement »), par des liens radio CDMA sur une interface normalisée *Uu*. Les RNC 22 sont reliés à un coeur de réseau (« core network ») non représenté fournissant les fonctions de commutation fixe et de gestion des abonnés.

Les protocoles de couche physique relatifs aux liens radio (couche 1 du modèle ISO) sont principalement implantés au niveau de l'UE 20 et du ou des nodes B 21 avec lesquels il est en liaison. Le protocole de contrôle des ressources radio RRC (« Radio Resource Control ») appartient à une couche supérieure et se trouve au niveau de l'UE 20 et de son RNC 22 de rattachement. L'instance RRC de l'UE 20 communique avec celle de son RNC 22 de rattachement au moyen d'une « connexion RRC » de la manière décrite dans la spécification technique 3G TS 25.331 v3.3.0 « RRC Protocol Specification (Release 1999) » publiée en juin 2000 par le 3GPP.

En général, les procédures de contrôle des liens radio sont supervisées par le RNC 22 selon le protocole RRC. Le module 25 représenté sur les figures 4 à 6 illustre ce traitement de couche RRC qui, dans le contexte précédemment décrit, exploite les mesures énergétiques lissées $\overline{C}$.

Ces figures 4 à 6 montrent que les modules 12, 13, 14 décrits en référence à la figure 1 peuvent être distribués de diverses manières entre les entités en communication.

La configuration de la figure 4 correspond au cas où ces modules 12, 13, 14 se trouvent tous dans la station recevant le signal dont la puissance est estimée. Cette station peut être l'UE 20, auquel cas les mesures portent sur les signaux descendants et les mesures lissées $\overline{C}$ remontent au RNC 22 par l'intermédiaire de la connexion RRC. La station équipée des modules 12, 13, 14 peut aussi être le node B 21, auquel cas les mesures portent sur les signaux montants et les mesures lissées $\overline{C}$ remontent au RNC 22 à travers l'interface *lub*.

Dans la configuration de la figure 5, l'estimation de vitesse faite par le module 12 dans l'UE 20 ou le node B 21 est transmise au module 13, situé dans le RNC 22, par l'intermédiaire de la connexion RRC ou de l'interface *lub*. Le RNC détermine alors la durée de moyennage T et la renvoie à l'UE 20 ou au node B 21 qui comporte le module de lissage 14. Ceci peut être effectué en ajustant le facteur d'oubli α, de la manière décrite dans la section 8.3.8 de la spécification technique 3G TS 25.433 v3.2.0 « UTRAN lub Interface NBAP Signalling (Release 1999) » publiée en juin 2000 par 3GPP, et de la manière décrite dans la section 8.5.7.7.2 de la spécification 3G TS 25.331 précitée dans le cas de l'UE 20. La mesure lissée $\overline{C}$ obtenue par le module 14 est ensuite transmise au module de traitement 25 du RNC 22.

Dans la configuration de la figure 6, le module de lissage 14A situé dans l'UE 20 ou le node B 21 effectue un premier lissage des échantillons de mesures énergétiques $C_k$ avec une fenêtre de durée relativement courte. Cette durée peut être fixe ou ajustée selon divers critères par le RNC 22 au moyen du mécanisme précédemment décrit. La valeur lissée $\overline{C}_1$ qui en résulte est remontée au RNC 22 par le module de lissage 14A de l'UE 20 ou du node B 21. Le RNC 22 comporte un second module de lissage 14B qui applique la durée de moyennage T sélectionnée par le module 13 sur la base de l'estimation de vitesse v. Ce second module de lissage 14B fournit au module de traitement 25 la mesure lissée $\overline{C}$ dont l'écart type est maîtrisé. La durée de moyennage appliquée en premier par le module 14A est réglée pour être plus courte que la durée T choisie en fonction de la vitesse. Cette première durée est par exemple de l'ordre de quelques dizaines à quelques centaines de millisecondes.

On notera que les illustrations des figures 4 à 6 ne sont que des exemples possibles de mise en oeuvre de l'invention. D'autres configurations sont envisageables. En particulier, l'estimation de vitesse v pourrait être obtenue par des moyens de mesure différents de ceux décrits, voire indépendants des signaux radio reçus.

D'autre part, l'invention n'est pas limitée aux systèmes UMTS considérés ci-dessus à titre d'illustration. Elle s'applique par exemple à des systèmes de seconde génération, de type GSM ou analogue, dont la supervision de liens radio exploite également des mesures énergétiques faites sur les signaux reçus.

**Revendications**

1. Procédé d'évaluation d'un niveau énergétique d'un signal reçu par l'intermédiaire d'une interface radio entre des stations de radiocommunication (20, 21), dans lequel on obtient des échantillons de mesure successifs ($C_k$) dépendant de l'énergie du signal, et on calcule une moyenne desdits échantillons pour évaluer le niveau énergétique ($\overline{C}$), **caractérisé en ce que** le calcul de moyenne desdits échantillons est effectué avec une durée de moyennage (T) dépendant d'un service dans le cadre duquel s'inscrit le signal reçu.

2. Procédé selon la revendication 1, dans lequel la durée de moyennage (T) croît en fonction du débit d'information porté par le signal reçu.

3. Procédé selon la revendication 1 ou 2, dans lequel le calcul de moyenne desdits échantillons ($C_k$) est effectué selon une fenêtre de moyennage exponentielle avec un facteur d'oubli inversement proportionnel à ladite durée de moyennage (T).

4. Procédé selon l'une quelconque des revendications 1 à 3, dans lequel on estime une vitesse de déplacement (v) d'une des stations (20), et la durée de moyennage (T) dépend en outre de la vitesse estimée.

5. Procédé selon la revendication 4. dans lequel la vitesse de déplacement (v) est estimée sur la base des variations dans le temps des échantillons de mesure ($C_k$).

**6.** Procédé selon la revendication 4 ou 5, dans lequel lesdites stations comprennent une station fixe (21) recevant ledit signal d'une station mobile (20) dont la vitesse de déplacement (v) est estimée, et dans lequel l'estimation de vitesse et le calcul de moyenne sont effectués dans la station fixe.

**7.** Procédé selon la revendication 4 ou 5, dans lequel lesdites stations comprennent une station fixe (21) recevant ledit signal d'une station mobile (20) dont la vitesse est estimée, et dans lequel le calcul de moyenne comprend un premier moyennage effectué dans la station fixe avec une première durée de moyennage inférieure à ladite durée dépendant de la vitesse estimée, et un second moyennage effectué dans un équipement (22) de contrôle de la station fixe avec ladite durée de moyennage (T) dépendant de la vitesse estimée.

**8.** Procédé selon la revendication 4 ou 5, dans lequel lesdites stations comprennent une station mobile (20) recevant ledit signal d'au moins une station fixe (21), et dans lequel l'estimation de vitesse et le calcul de moyenne sont effectués dans la station mobile.

**9.** Dispositif d'évaluation d'un niveau énergétique d'un signal reçu par une station mobile de radiocommunication (20), comprenant des moyens de mesure (6) pour obtenir des échantillons successifs (Ck) dépendant de l'énergie du signal, et des moyens (14) de calcul d'une moyenne desdits échantillons pour évaluer le niveau énergétique ($\overline{C}$), **caractérisé en ce que** les moyens de calcul de moyenne (14) sont commandés pour faire dépendre une durée de moyennage des échantillons (T) d'un service dans le cadre duquel s'inscrit le signal reçu.

**10.** Dispositif d'évaluation d'un niveau énergétique d'un signal reçu par une station fixe de radiocommunication (21) en provenance d'une station mobile (20), comprenant des moyens de mesure (6) pour obtenir des échantillons successifs ($C_k$) dépendant de l'énergie du signal, et des moyens (14) de calcul d'une moyenne desdits échantillons pour évaluer le niveau énergétique ($\overline{C}$), **caractérisé en ce que** les moyens de calcul de moyenne (14) sont commandés pour faire dépendre une durée de moyennage des échantillons (T) d'un service dans le cadre duquel s'inscrit le signal reçu.

**11.** Dispositif selon la revendication 9 ou 10, dans lequel la durée de moyennage (T) croît en fonction du débit d'information porté par le signal reçu.

**12.** Dispositif selon l'une quelconque des revendications 9 à 11, comprenant en outre des moyens (12) d'obtention d'une vitesse de déplacement estimée (v) de la station mobile, et dans lequel les moyens de calcul de moyenne (14) sont en outre commandés pour faire dépendre ladite durée de moyennage (T) de la vitesse estimée.

**13.** Dispositif d'évaluation selon la revendication 12, dans lequel les moyens (12) d'obtention de la vitesse de déplacement estimée sont agencés pour estimer la vitesse (v) sur la base des variations dans le temps des échantillons de mesure ($C_k$).

**14.** Dispositif d'évaluation selon l'une quelconque des revendications 9 à 13, dans lequel les moyens de calcul de moyenne (14) utilisent une fenêtre de moyennage exponentielle avec un facteur d'oubli inversement proportionnel à ladite durée de moyennage (T).

**Claims**

**1.** A method of evaluating an energy level of a signal received via a radio interface between radio communications stations (20, 21), in which successive measurement samples ($C_k$) which depend on the energy of the signal are obtained, and an average of said samples is calculated to evaluate the energy level ($\overline{C}$), the method being **characterized in that** the average of said samples is calculated over an averaging duration (T) that depends on a service to which the received signal pertains.

**2.** A method according to claim 1, in which the averaging duration (T) increases as a function of the data rate carried by the received signal.

**3.** A method according to claim 1 or claim 2, in which the average of said samples ($C_k$) is calculated using an exponential averaging window with a weight factor inversely proportional to said averaging duration (T).

**4.** A method according to any one of claims 1 to 3, in which a travel speed (v) of one of the stations (20) is estimated,

7

and the averaging duration (T) also depends on the estimated speed.

5. A method according to claim 4, in which the travel speed (v) is estimated on the basis of time variations of the measurement samples ($C_k$).

6. A method according to claim 4 or claim 5, in which said stations comprise a fixed station (21) which receives said signal from a mobile station (20) for which the travel speed (v) is estimated, and in which the speed estimation and the average calculation are performed in the fixed station.

7. A method according to claim 4 or claim 5, in which said stations comprise a fixed station (21) which receives said signal from a mobile station (20) for which the speed has been estimated, and in which the calculation of the average comprises a first averaging operation performed in the fixed station over a first averaging duration shorter than said duration depending on the estimated speed, and a second averaging duration performed in an equipment (22) witch controls the fixed station over said averaging duration (T) that depends on the estimated speed.

8. A method according to claim 4 or claim 5, in which said stations comprise a mobile station (20) which receives said signal from at least one fixed station (21), and in which the speed estimation and the average calculation are performed in the mobile station.

9. A device for evaluating an energy level of a signal received by a mobile radio communications station (20), the device comprising measurement means (6) for obtaining successive samples ($C_k$) which depend on the energy of the signal, and means (14) for calculating an average of said samples to evaluate the energy level ($\overline{C}$), the device being **characterized in that** the means (14) for calculating the average are controlled to cause an sample averaging duration (T) to depend on a service to which the received signal pertains.

10. A device for evaluating an energy level of a signal received by a fixed radio communications station (21), and transmitted by a mobile station (20), the device comprising measurement means (6) for obtaining successive samples ($C_k$) which depend on the energy of the signal, and means (14) for calculating an average of said samples to evaluate the energy level ($\overline{C}$), the device being **characterized in that** the means (14) for calculating the average are controlled to cause an sample averaging duration (T) to depend on a service to which the received signal pertains.

11. A device according to claim 9 or claim 10, in which the averaging duration (T) increases as a function of the data rate carried by the received signal.

12. A device according to any one of claims 9 to 11, further comprising means (12) for obtaining an estimated travel speed (v) of the mobile station, and in which the means (14) for calculating the average are also controlled to cause said averaging duration (T) to depend on the estimated speed.

13. An evaluation device according to claim 12, in which the means (12) for obtaining the estimated travel speed are arranged to estimate the speed (v) on the basis of time variations of the measurement samples ($C_k$).

14. An evaluation device according to any one of claims 9 to 13, in which the means (14) for calculating the average use an exponential averaging window with a weight factor that is inversely proportional to said averaging duration (T).

**Patentansprüche**

1. Verfahren zur Schätzung eines Energiepegels eines über eine Funkschnittstelle zwischen Funkkommunikationsstationen (20, 21) empfangenen Signals, bei welchem aufeinander folgende Messungsabtastwerte ($C_k$) in Abhängigkeit von der Energie des Signals ermittelt werden und bei der ein Mittelwert dieser Abtastwerte bestimmt wird, um den Energiepegel ($\overline{C}$) zu schätzen, **dadurch gekennzeichnet, dass** die Mittelwertberechnung dieser Abtastwerte mit einer Mittelungsdauer (T) erfolgt, die von einem Dienst abhängt, in dessen Rahmen das empfangene Signal erfolgt.

2. Verfahren nach Anspruch 1, bei dem die Mittelungsdauer (T) in Abhängigkeit von dem durch das empfangene Signal transportierten Informationsdurchsatz steigt.

3. Verfahren nach Anspruch 1 oder 2, bei dem die Mittelwertberechnung der Abtastwerte ($C_k$) entsprechend einem

exponentiellen Mittelungsfenster mit einem Vergessensfaktor durchgeführt wird, der umgekehrt proportional zu dieser Mittelungsdauer ist.

4. Verfahren nach einem der Ansprüche 1 bis 3, bei dem eine Bewegungsgeschwindigkeit (v) einer der Stationen (20) geschätzt wird und die Mittelungsdauer (T) außerdem von der geschätzten Geschwindigkeit abhängt.

5. Verfahren nach Anspruch 4, bei dem die Bewegungsgeschwindigkeit (v) auf der Grundlage der zeitlichen Änderung der Messungsabtastwerte ($C_k$) geschätzt wird.

6. Verfahren nach Anspruch 4 oder 5, bei dem die Stationen eine feste Station (21) umfassten, die das Signal einer mobilen Station (20) empfängt, deren Bewegungsgeschwindigkeit (v) geschätzt wird, und bei dem die Geschwindigkeitsschätzung und die Mittelbewertberechnung in der festen Station durchgeführt werden.

7. Verfahren nach Anspruch 4 oder 5, bei dem die Stationen eine feste Station (21) umfassen, die das Signal einer mobilen Station (20) empfängt, deren Geschwindigkeit geschätzt wird, und bei der die Mittelwertberechnung eine erste Mittelung umfasst, die in der festen Station mit einer ersten Mittelungsdauer durchgeführt wird, welche kleiner ist als die von der geschätzten Geschwindigkeit abhängige Dauer, und eine zweite Mittelung, die in einer Steuerungsvorrichtung (22) der festen Station mit der Mittelungsdauer (T) durchgeführt wird, die von der geschätzten Geschwindigkeit abhängt.

8. Verfahren nach Anspruch 4 oder 5, bei dem die Stationen eine mobile Station (20) umfassen, die das Signal von mindestens einer festen Station (21) empfängt und bei dem die Schätzung der Geschwindigkeit und die Berechnung des Mittelwertes in der mobilen Station durchgeführt werden.

9. Gerät zur Schätzung eines Energiepegels eines über eine mobile Funkkommunikationsstation (20) empfangenen Signals, umfassend Messvorrichtungen (6), um aufeinander folgende Abtastwerte ($C_k$) in Abhängigkeit von der Energie des Signals zu ermitteln, und Vorrichtungen (14) zur Mittelwertberechnung dieser Abtastwerte zur Schätzung des Energiepegels ($\overline{C}$), **dadurch gekennzeichnet, dass** die Rechenvorrichtungen (14) so gesteuert werden, dass sie eine Mittelungsdauer der Abtastwerte (T) von einem Dienst abhängen lassen, in dessen Rahmen das empfangene Signal erfolgt.

10. Gerät zur Schätzung eines Energiepegels eines über eine feste Funkkommunikationsstation (21) empfangenen Signals, welches von einer mobilen Station (20) kommt, umfassend Messvorrichtungen (6), um aufeinander folgende Abtastwerte ($C_k$) in Abhängigkeit von der Energie des Signals zu ermitteln, und Vorrichtungen (14) zur Mittelwertberechnung dieser Abtastwerte zur Schätzung des Energiepegels ($\overline{C}$), **dadurch gekennzeichnet, dass** die Rechenvorrichtungen (14) so gesteuert werden, dass sie eine Mittelungsdauer der Abtastwerte (T) von einem Dienst abhängen lassen, in dessen Rahmen das empfangene Signal erfolgt.

11. Gerät nach Anspruch 9 oder 10, bei dem die Mittelungsdauer (T) in Abhängigkeit von dem durch das empfangene Signal transportierten Informationsdurchsatz steigt.

12. Gerät nach einem der Ansprüche 9 bis 11, außerdem umfassend Vorrichtungen (12) zur Ermittlung einer geschätzten Bewegungsgeschwindigkeit (v) der mobilen Station und bei dem die Rechenvorrichtungen (14) außerdem so gesteuert werden, dass sie diese Mittelungsdauer (T) von der geschätzten Geschwindigkeit abhängen lassen.

13. Gerät zur Schätzung nach Anspruch 12, bei dem die Vorrichtungen (12) zur Ermittlung der geschätzten Bewegungsgeschwindigkeit so angeordnet sind, dass sie die Geschwindigkeit (v) auf der Grundlage der zeitlichen Änderung der Messungsabtastwerte ($C_k$) schätzen.

14. Gerät zur Schätzung nach einem der Ansprüche 9 bis 13, bei dem die Mittelwertberechnungsvorrichtungen (14) ein exponentielles Mittelungsfenster mit einem Vergessensfaktor verwenden, der umgekehrt proportional zur Mittelungsdauer (T) ist.

FIG.1.

ESTIMATION VITESSE (12) $\xrightarrow{v}$ SÉLECTION DURÉE DE MOYENNAGE (13)

(14) LISSAGE $\xrightarrow{\overline{c}}$

$C_k$ $NO_k$ LISSAGE $\xrightarrow{\overline{NO}}$ (15)

(6) SONDAGE CANAL

$\tau_1, \dots, \tau_n$ $A_1, \dots, A_n$

ÉTAGE RADIO (1) — CAN (3) — FILTRE RÉCEPTION (4) $\xrightarrow{Y}$ (5)

SYMBOLES PILOTES X C(t)

(8) $c(t)$ — RETARD (9) $\tau_1$ — (10) $A_1^*$ — (11)

RETARD (9) $\tau_2$ — $A_2^*$

RETARD (9) $\tau_n$ — (10) $A_n^*$

$+$ $\xrightarrow{\hat{b}}$

(7)

EP 1 334 577 B1

FIG.2.

CONNEXiON RRC

RNC — Iub — NODE B ····· Uu ····· UE

22    21    20

**FIG.3**

**FIG.4.**

ESTiMATiON ViTESSE — 12

SÉLECTiON DURÉE DE MOYENNAGE — 13

LiSSAGE — 14

TRAiTEMENT — 25

SÉLECTiON DURÉE DE MOYENNAGE — 13

ESTiMATiON ViTESSE — 12

LiSSAGE — 14

TRAiTEMENT — 25

**FIG.5.**

SÉLECTiON DURÉE DE MOYENNAGE — 13

ESTiMATiON ViTESSE — 12

LiSSAGE 1 — 14A

LiSSAGE 2 — 14B

TRAiTEMENT — 25

**FIG.6.**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HOLTZMAN J M.** *proceedings of the international conférence on communications,* 14 Juin 1992, vol. 2, 1032-1036